# EUROPEAN PATENT APPLICATION

(11) **EP 4 582 920 A1**
(43) Date of publication of application: **09.07.2025**
(21) Application number: 23876753.7
(22) Date of filing: 12.10.2023
(51) Int. Cl.: G06F 3/04817

(54) **BACKGROUND APPLICATION MANAGEMENT METHOD AND APPARATUS, ELECTRONIC DEVICE AND MEDIUM**

(30) Priority: 13.10.2022 CN 202211258119
(71) Applicant: Vivo Mobile Communication Co., Ltd., Dongguan, Guangdong 523863 (CN)
(72) Inventor: ZHU, Lugen, Dongguan, Guangdong 523863 (CN)
(74) Representative: Murgitroyd & Company
(86) International application number: PCT/CN2023/124126
(87) International publication number: WO 2024/078552

(57) **Abstract**

This application discloses a background application management method and apparatus, an electronic device, and a medium, and relates to the field of electronic information technologies. The background application management method includes: receiving a first input; and in response to the first input, displaying a first background running interface matching a current first screen display direction. The first background running interface includes application identifiers corresponding to N applications running in the background, where a display mode corresponding to the N applications running in the background matches the first screen display direction, and the display mode corresponding to the applications includes at least one of the following: a landscape display and a portrait display, where N is a positive integer.

## Description

### CROSS-REFERENCE TO RELATED APPLICATION

This application claims priority to Chinese Patent Application No. 202211258119.X, filed with the China National Intellectual Property Administration on October 13, 2022 and entitled "BACKGROUND APPLICATION MANAGEMENT METHOD AND APPARATUS, ELECTRONIC DEVICE, AND MEDIUM", which is incorporated herein by reference in its entirety.

### TECHNICAL FIELD

This application relates to the field of electronic information technologies, and specifically, to a background application management method and apparatus, an electronic device, and a medium.

### BACKGROUND

With the development of electronic device technologies, people use electronic devices for longer time and more frequently, users may install a variety of applications to enrich their work and entertainment life, and the applications installed in the electronic devices may be classified into a landscape application and a portrait application.

In related technologies, a background running interface of an electronic device includes all applications running in the background. When the user needs to open an application in the background running interface, the user needs to find the application from all the applications running in the background. As a result, another application may be opened by mistake. For example, the portrait application is opened by mistake when the landscape application needs to be opened. In this case, the application that is opened by mistake needs to be closed first, and then the application that originally needs to be opened is opened.

However, in the foregoing solution, when an application needs to be opened, the application needs to be found from all the applications. In addition, the another application may be opened by mistake in the foregoing process, and after the another application is opened by mistake, multiple operations are required to open the application that originally needs to be opened. Consequently, efficiency of finding the application when the application needs to be opened is low.

### SUMMARY

Embodiments of this application are intended to provide a background application management method and apparatus, an electronic device, and a medium, to resolve a problem of low efficiency of finding an application when the application needs to be opened.

According to a first aspect, an embodiment of this application provides a background application management method. The method includes: receiving a first input; and in response to the first input, displaying a first background running interface matching a current first screen display direction, where the first background running interface includes application identifiers corresponding to N applications running in the background, where a display mode corresponding to the N applications running in the background matches the first screen display direction, and the display mode corresponding to the applications includes at least one of the following: a landscape display and a portrait display, where N is a positive integer.

According to a second aspect, an embodiment of this application provides a background application management apparatus. The apparatus includes a receiving module and a display module, where the receiving module is configured to receive a first input; and the display module is configured to: in response to the first input received by the receiving module, display a first background running interface matching a current first screen display direction, where the first background running interface includes application identifiers corresponding to N applications running in the background, where a display mode corresponding to the N applications running in the background matches the first screen display direction, and the display mode corresponding to the applications includes at least one of the following: a landscape display and a portrait display, where N is a positive integer.

According to a third aspect, an embodiment of this application provides an electronic device. The electronic device includes a processor and a memory, the memory stores a program or an instruction that is executable on the processor, and the program or the instruction is executed by the processor to implement the steps of the method according to the first aspect.

According to a fourth aspect, an embodiment of this application provides a readable storage medium. The readable storage medium stores a program or an instruction, and the program or the instruction is executed by a processor to implement the steps of the method according to the first aspect.

According to a fifth aspect, an embodiment of this application provides a chip. The chip includes a processor and a communication interface, the communication interface is coupled to the processor, and the processor is configured to run a program or an instruction to implement the method according to the first aspect.

According to a sixth aspect, an embodiment of this application provides a computer program product. The program product is stored in a storage medium, and the program product is executed by at least one processor to implement the method according to the first aspect.

In the embodiments of this application, the electronic device may receive the first input to trigger display of the first background running interface matching the current first screen display direction, where the first background running interface includes the application identifiers corresponding to the N applications running in the background, and the display mode corresponding to the application includes at least one of the following: the landscape display and the portrait display. In this way, when a background running interface is displayed in this application, an application identifier matching a current screen display direction is displayed in the background running interface, so that the electronic device may display, in the background running interface, only N applications running in the background whose display mode matches the current screen display direction. Therefore, a user only needs to find and open a corresponding application from the N applications running in the background, to improve efficiency of finding the application when opening the application.

### BRIEF DESCRIPTION OF DRAWINGS

FIG. 1 is a schematic flowchart of a background application management method according to an embodiment of this application;
FIG. 2 is a first schematic diagram of an interface instance applied to a background application management method according to an embodiment of this application;
FIG. 3 is a second schematic diagram of an interface instance applied to a background application management method according to an embodiment of this application;
FIG. 4 is a third schematic diagram of an interface instance applied to a background application management method according to an embodiment of this application;
FIG. 5 is a fourth schematic diagram of an interface instance applied to a background application management method according to an embodiment of this application;
FIG. 6 is a fifth schematic diagram of an interface instance applied to a background application management method according to an embodiment of this application;
FIG. 7 is a sixth schematic diagram of an interface instance applied to a background application management method according to an embodiment of this application;
FIG. 8 is a schematic diagram of a structure of a background application management apparatus according to an embodiment of this application;
FIG. 9 is a schematic diagram of a structure of an electronic device according to an embodiment of this application; and
FIG. 10 is a schematic diagram of hardware of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill based on the embodiments of this application shall fall within the protection scope of this application.

In the specification and claims of this application, the terms such as "first" and "second" are used for distinguishing similar objects, and are not necessarily used to describe a particular order or sequence. It should be understood that terms used in such a way are interchangeable in proper circumstances, so that embodiments of this application can be implemented in an order other than the order illustrated or described herein. Objects classified by "first", "second", and the like are usually of a same type, and a quantity of objects is not limited. For example, there may be one or more first objects. In addition, in this specification and the claims, "and/or" indicates at least one of connected objects, and a character "/" generally indicates an "or" relationship between associated objects.

With reference to the accompanying drawings, a background application management method and apparatus, an electronic device, and a medium provided in embodiments of this application are described in detail by using specific embodiments and application scenarios thereof.

The background application management method provided in the embodiments of this application is applied to a scenario in which a background application is opened. A specific application scenario may be determined according to a usage requirement, and is not limited in this application.

A scenario in which a landscape application A in a background running interface of an electronic device is opened is used as an example. When a user needs to open the landscape application A, the electronic device first receives an input for opening the background running interface from the user, and triggers display of all background application identifiers including the landscape application A. Then, the user needs to find an application identifier of the landscape application A from all the background application identifiers, and finally tap the application identifier to open the landscape application A. In addition, a portrait application B may be opened by mistake, and when the portrait application B is opened by mistake, a closing gesture for the landscape application cannot be used. As a result, steps for closing the portrait application B are complicated. After the portrait application B is closed, the landscape application A is opened. Therefore, in a process of opening the landscape application A, steps are complicated.

In the embodiments of this application, when the user needs to open the landscape application A, the user may receive the input for opening the background running interface from the user when a screen direction of the electronic device is a landscape direction. In this case, only landscape application identifiers including the landscape application A are displayed in the background running interface. Then, the user only needs to find the application identifier of the landscape application A in the landscape application identifiers, and finally tap the application identifier to open the landscape application A. In addition, the background running interface displays only the landscape application identifiers matching the landscape direction. This avoids a case of opening the portrait application B by mistake, and improves efficiency of finding the landscape application A when opening the landscape application A.

The background application management method provided in the embodiments may be performed by the background application management apparatus, and the background application management apparatus may be an electronic device, or a control module or a processing module in the electronic device, or the like. The following describes the technical solutions provided in the embodiments of this application by using the electronic device as an example.

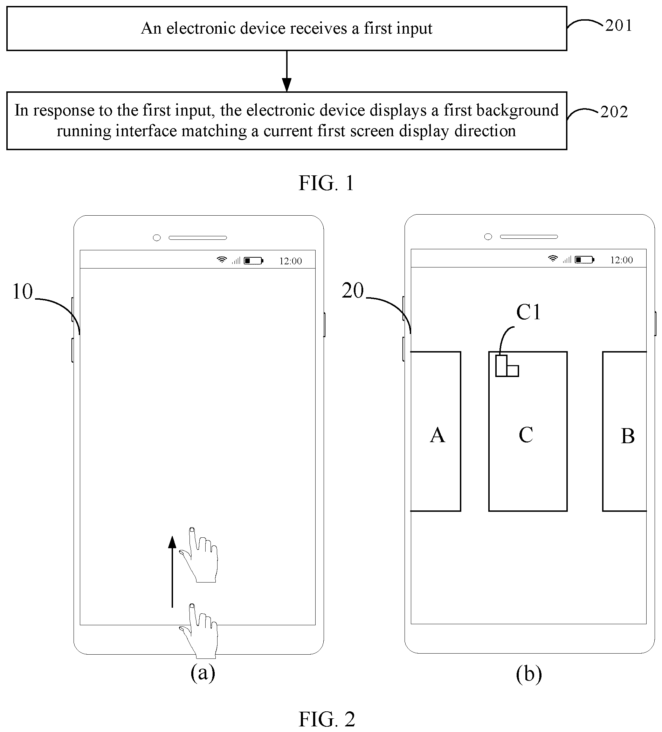

An embodiment of this application provides a background application management method. As shown in FIG. 1, the background application management method may include the following step 201 and step 202.

Step 201: An electronic device receives a first input.

In this embodiment of this application, the first input is used to trigger the electronic device to display a background running interface.

In this embodiment of this application, the first input may be a tap input of a user on a screen of the electronic device, a voice input of the user, or another feasible input. This is not limited in this embodiment of this application.

Step 202: In response to the first input, the electronic device displays a first background running interface matching a current first screen display direction.

In this embodiment of this application, the first background running interface includes application identifiers corresponding to N applications running in the background, where N is a positive integer.

In this embodiment of this application, a display mode corresponding to the N applications running in the background matches the first screen display direction.

In this embodiment of this application, the first background running interface matching the first screen display direction indicates that the display mode corresponding to all applications running in the background included in the background running interface matches the first screen display direction.

For example, the display mode corresponding to the applications includes at least one of the following: a landscape display and a portrait display.

For example, the landscape display is a display mode of an application that needs to be started in a landscape mode.

For example, the portrait display is a display mode of an application that needs to be started in a portrait mode.

In this embodiment of this application, the electronic device may add a setting of a landscape/portrait attribute for an application installed in the electronic device to perform landscape/portrait classification on the application running in the background.

In this embodiment of this application, the first screen display direction includes a landscape direction and a portrait direction.

In this embodiment of this application, the first background running interface displays an application identifier of an application whose display mode is the landscape display or an application identifier of an application whose display mode is the portrait display.

In this embodiment of this application, the display mode corresponding to the application further includes landscape/portrait bidirectional display.

It should be noted that the landscape/portrait bidirectional display indicates that the application may be displayed in both a landscape display mode and a portrait display mode.

For example, when a screen display direction of the electronic device is the portrait direction, in a case that the first background display interface includes an application in a landscape/portrait bidirectional display mode, the landscape/portrait bidirectional display application is displayed in the first background display interface in the portrait display mode.

For example, when a screen display direction of the electronic device is the landscape direction, in a case that the first background display interface includes an application in a landscape/portrait bidirectional display mode, the landscape/portrait bidirectional display application is displayed in the first background display interface in the landscape display mode.

For example, in a case that the first screen display direction is the landscape direction, when the user opens the first background running interface, only the landscape display application and the landscape/portrait bidirectional display application are displayed in the first background running interface.

In an example in which the first screen display direction is the portrait direction, and the N applications running in the background are two portrait display applications and one landscape/portrait bidirectional display application (for example, a portrait display application A, a portrait display application B, and a landscape/portrait bidirectional display application C), as shown in (a) in FIG. 2, the user slides upward at the bottom of a home screen 10 (that is, the first input). Then, as shown in (b) in FIG. 2, a background running interface 20 (that is, the first background running interface) matching the portrait direction (that is, the first screen display direction) is displayed, and application identifiers corresponding to the portrait display application A, the portrait display application B, and the landscape/portrait bidirectional display application C are displayed in the background running interface 20. In addition, because the application C is a landscape/portrait bidirectional display application, an icon C1 is further displayed on the application identifier of the application C, where the application icon C1 indicates that the application C is the landscape/portrait bidirectional display application.

For example, in a case that the first screen display direction is the portrait direction, when the user opens the first background running interface, only the portrait display application and the landscape/portrait bidirectional display application are displayed in the first background running interface.

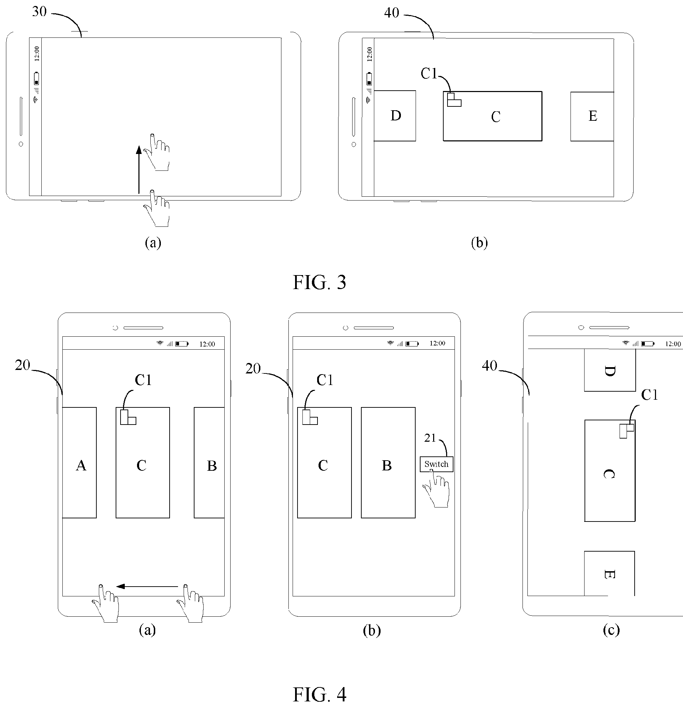

In an example in which the first screen display direction is the landscape direction, and the N applications running in the background are two landscape display applications and one landscape/portrait bidirectional display application (for example, a landscape display application D, a landscape display application E, and a landscape/portrait bidirectional display application C), as shown in (a) in FIG. 3, the user slides upward at the bottom of a home screen 30 (that is, the first input). Then, as shown in (b) in FIG. 3, a background running interface 40 (that is, the first background running interface) matching the landscape direction (that is, the first screen display direction) is displayed, and application identifiers corresponding to the landscape display application D, the landscape display application E, and the landscape/portrait bidirectional display application C are displayed in the background running interface 40. In addition, because the application C is a landscape/portrait bidirectional display application, an icon C1 is further displayed on the application identifier of the application C, where the application icon C1 indicates that the application C is the landscape/portrait bidirectional display application.

In the background application management method provided in this embodiment of this application, the electronic device may receive the first input to trigger display of the first background running interface matching the current first screen display direction, where the first background running interface includes the application identifiers corresponding to the N applications running in the background, and the display mode corresponding to the application includes at least one of the following: the landscape display and the portrait display. In this way, when a background running interface is displayed in this application, an application identifier matching a current screen display direction is displayed in the background running interface, so that the electronic device may display, in the background running interface, only N applications running in the background whose display mode matches the current screen display direction. Therefore, the user only needs to find and open a corresponding application from the N applications running in the background, to improve efficiency of finding the application when opening the application.

Optionally, in this embodiment of this application, in a case that the first background running interface further includes a switching control, after the foregoing step 202, the background application management method provided in this embodiment of this application further includes the following step 203 and step 204.

Step 203: The electronic device receives a second input for the switching control.

In this embodiment of this application, the second input may be a tap input of the user on the switching control, a voice input of the user, or another feasible input. This is not limited in this embodiment of this application.

In this embodiment of this application, the second input is used to trigger the electronic device to switch the background running interface.

Step 204: In response to the second input, the electronic device displays a second background running interface matching a second screen display direction indicated by the switching control.

In this embodiment of this application, the second screen display direction is different from the first screen display direction.

In this embodiment of this application, the second background running interface matching the second screen display direction indicates that the display mode corresponding to all applications running in the background included in the background running interface matches the second screen display direction. The matching may mean the same or the opposite.

For example, when the first screen display direction is the portrait direction, the second screen display direction is the landscape direction.

For example, when the first screen display direction is the landscape direction, the second screen display direction is the portrait direction.

In this embodiment of this application, when another application that does not match the first screen display direction is present in background applications currently running in the electronic device, a switching control may be displayed in the first background running interface. After the user taps the switching control, the electronic device displays an application identifier of the another application that does not match the first screen display direction.

For example, with reference to FIG. 2 and FIG. 3, an example in which the first screen display direction is the portrait direction and the second screen display direction is the landscape direction is used. As shown in (a) in FIG. 4, the background running interface 20 of the electronic device displays the application identifiers corresponding to the portrait display application A, the portrait display application B, and the landscape/portrait bidirectional display application C. In a case that the user needs to switch to the background running interface 40, the user may slide leftward in the background running interface 20. In this case, as shown in (b) in FIG. 4, the background running interface 20 of the electronic device displays the application identifiers corresponding to the portrait display application B and the landscape/portrait bidirectional display application C and a switching control 21. In this case, the user may tap (the second input) the switching control 21. Then, as shown in (c) in FIG. 4, the electronic device displays the background running interface 40, and the background running interface 40 displays the application identifiers corresponding to the landscape display application D, the landscape display application E, and the landscape/portrait bidirectional display application C.

In this way, a switching operation of the user is received to trigger the electronic device to display a background running interface of another screen display direction, to improve convenience of displaying applications in different display modes by the electronic device.

Optionally, in this embodiment of this application, a first identifier is displayed on a target application identifier in the second background running interface, the first identifier indicates a first display mode, and the first display mode matches the second screen display direction. After the foregoing step 204, the background application management method provided in this embodiment of this application further includes the following step 205 and step 206.

Step 205: The electronic device receives a third input for the first identifier.

In this embodiment of this application, the third input may be a tap input of the user on the first identifier or another feasible input. This is not limited in this embodiment of this application.

In this embodiment of this application, the third input is used to update a display direction of the first identifier.

In this embodiment of this application, the first identifier indicates a display mode of a target application corresponding to the target application identifier.

In this embodiment of this application, the target application may be a landscape/portrait bidirectional display application, that is, the target application may be displayed in a landscape mode or a portrait mode.

Step 206: In response to the third input, the electronic device updates the first identifier.

In this embodiment of this application, an updated first identifier indicates a second display mode.

For example, the second display mode does not match the second screen display direction. For example, the first identifier indicates that the target application is displayed in the landscape mode, and the updated first identifier indicates that the target application is displayed in the portrait mode.

In this embodiment of this application, after switching from the first background running interface to the second background running interface, the electronic device may receive an input on the landscape/portrait bidirectional display application displayed in the second background running interface, to update the first display mode indicated by the first identifier of the landscape/portrait bidirectional display application to the second display mode matching the first screen display direction.

Optionally, in this embodiment of this application, after the foregoing step 206, the background application management method provided in this embodiment of this application further includes the following step 207 and step 208.

Step 207: The electronic device receives a fourth input for the updated first identifier.

In this embodiment of this application, the fourth input may be a tap input of the user on the updated first identifier or another feasible input. This is not limited in this embodiment of this application.

In this embodiment of this application, the fourth input is used to trigger the electronic device to display an application interface of the application.

Step 208: In response to the fourth input, the electronic device displays, based on the second display mode, an application interface of the target application corresponding to the target application identifier.

Optionally, some interfaces in application interfaces of the target application may be displayed in the landscape mode and some interfaces may be displayed in the portrait mode. For example, the application interfaces of the target application include an interface A and an interface B. The interface A is displayed in the landscape mode and the interface B is displayed in the portrait mode. Therefore, after the first identifier is updated, the fourth input for the target application identifier is received, and the application interface of the target application may be displayed based on the second display mode, such as the interface B is displayed. In this way, quick switching between the landscape interface and the portrait interface of the application can alternatively be performed.

In this embodiment of this application, after updating the first identifier of the target application, the electronic device may receive the input on the target application identifier to trigger the electronic device to display, in the display mode indicated by the updated first identifier, the application interface of the target application corresponding to the target application identifier.

In this way, the user input is received to trigger the electronic device to change the display mode corresponding to the target application, so that flexibility of the electronic device to open the target application in different display modes is improved.

Optionally, in this embodiment of this application, after the foregoing step 202, the background application management method provided in this embodiment of this application further includes the following step 301 and step 302.

Step 301: The electronic device receives a fifth input for adjusting the first screen display direction.

In this embodiment of this application, the fifth input may be a rotation input of the user on the electronic device or another feasible input. This is not limited in this embodiment of this application.

In this embodiment of this application, the fifth input is used to adjust the screen display direction of the electronic device.

Step 302: In response to the fifth input, the electronic device displays a third background running interface matching an adjusted third screen display direction.

In this embodiment of this application, the third screen display direction is the same as the second screen display direction.

In this embodiment of this application, the electronic device may rotate the electronic device to adjust the screen display direction of the electronic device, to trigger the electronic device to automatically display a background running interface matching an adjusted screen display direction.

In this way, the screen display direction of the electronic device is adjusted to automatically trigger the electronic device to display the corresponding background running interface, so that convenience of displaying applications in different display modes by the electronic device is further improved.

Optionally, in this embodiment of this application, after the foregoing step 202, the background application management method provided in this embodiment of this application further includes the following step 303 and step 304.

Step 303: The electronic device receives a sixth input for a first application identifier in the first background running interface.

In this embodiment of this application, the first application identifier may be any one of the application identifiers corresponding to the N applications running in the background.

In this embodiment of this application, the sixth input may be a tap input of the user on the first application identifier, a voice input of the user, or another feasible input. This is not limited in this embodiment of this application.

In this embodiment of this application, the sixth input is used to trigger the electronic device to display an application interface of the application.

Step 304: In response to the sixth input, the electronic device displays an application interface of a first application based on a display mode corresponding to the first application indicated by the first application identifier.

For example, in a case that the first background running interface displays an application identifier of an application whose display mode is the portrait display, the foregoing step 304 is described below by using examples in three different cases.

Example 1: In a case that the first application is a portrait display application, after the user taps the first application identifier, the electronic device normally displays the application interface of the first application in the portrait display mode.

Example 2: In a case that the first application is a landscape/portrait bidirectional display application, after the user taps the first application identifier, the application interface of the first application is still normally displayed in the portrait display mode when a previous display mode of the first application is the portrait display; or when a previous display mode of the first application is the landscape display, the electronic device automatically switches the display mode of the first application to the portrait display and displays the application interface of the first application in the portrait display mode.

Example 3: In a case that the first application is a landscape display application, after the user taps the first application identifier, the electronic device displays the application interface of the first application in the landscape display mode, and displays prompt information (for example, rotate to a landscape mode for use).

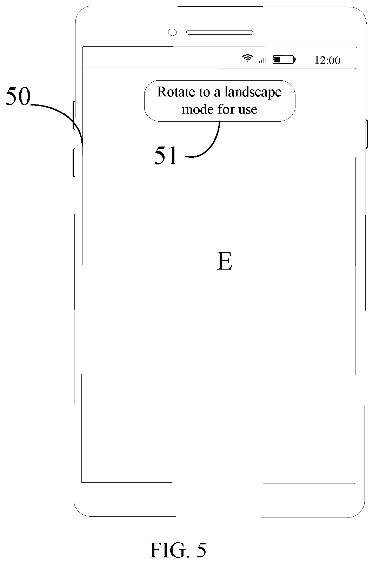

In an example in which the first application is a landscape display application, as shown in (c) in FIG. 4, in a case that the user taps (that is, the sixth input) the application identifier of the landscape display application E, as shown in FIG. 5, the electronic device displays an interface 50 (that is, the application interface of the first application), and displays a suspended window 51 (that is, the prompt information) in the interface 50, to prompt the user to rotate to a corresponding direction.

In this way, the input of the user on the application identifier is received to display the application interface of the application in the display mode matching the current screen display direction, so that flexibility of displaying the application interface by the electronic device is improved.

Optionally, in this embodiment of this application, after the foregoing step 304, the background application management method provided in this embodiment of this application may further include the following step 305 and step 306.

Step 305: The electronic device receives a drag input on the application interface.

In this embodiment of this application, the drag input is used to trigger the electronic device to delete the application interface.

In this embodiment of this application, the drag input may be a continuous drag input in different directions.

For example, the drag input includes a drag input in a first direction and a drag input in a second direction.

It should be noted that the first direction is different from the second direction.

Step 306: In response to the drag input, in a drag process of the drag input, the electronic device updates the application interface to the application identifier of the first application, and displays a deletion control; and deletes the application interface when the drag input drags the application identifier to the deletion control.

In this embodiment of this application, the electronic device may determine, after completing the drag input in the first direction, that the application interface is selected, and then reduce the application interface to the application identifier after completing the drag input in the second direction.

In this embodiment of this application, the electronic device may further display the deletion control after completing the drag input in the second direction, where the deletion control indicates to delete the application interface dragged to the deletion control.

In this embodiment of this application, the deletion of the application interface may be represented as closing of the first application.

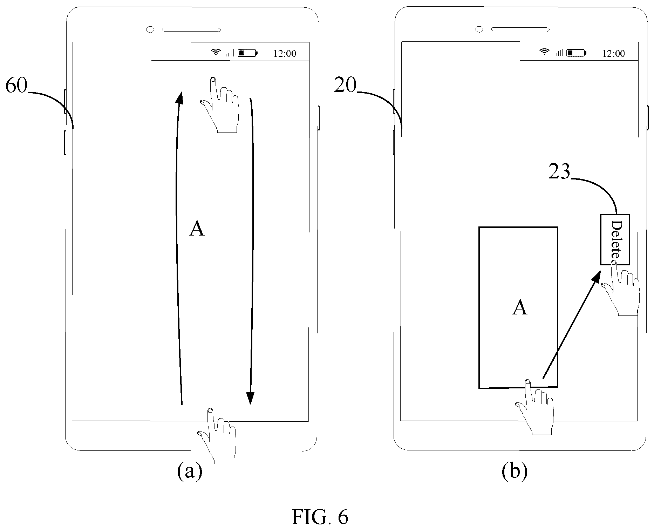

For example, as shown in (a) in FIG. 6, the first application is the portrait application A. The electronic device displays an application interface 60 of the portrait application A. In a case that the user needs to close the portrait application A, the user may slide upward from the bottom of the application interface 60 to the top of the application interface 60 (that is, the drag input in the first direction). In this case, the electronic device selects the application interface 60, and then the user slides downward to the bottom of the application interface 60 (that is, the drag input in the second direction). In this case, as shown in (b) in FIG. 6, a portrait background display interface 20 of the electronic device displays an application identifier for updating the application interface 60 to the portrait application A (that is, the application identifier of the first application) and a deletion control 23. Then, the user continues to drag the application identifier of the portrait application A to the deletion control 23 to delete the application interface 60, that is, to close the portrait application A.

It should be noted that in related technologies, the electronic device displays the background running interface after the user slides upward for the input for the first time, and then the user can close an application only after the user slides upward an application identifier of the application in the background running interface again. As a result, a closing operation is complicated.

In this way, the application can be closed by using one input on the application interface of the application, to simplify operation steps of closing the application.

Optionally, in this embodiment of this application, after the foregoing step 202, the background application management method provided in this embodiment of this application may further include the following step 307 to step 309.

Step 307: The electronic device receives a seventh input for a second application identifier and a third application identifier in the first background running interface.

In this embodiment of this application, the seventh input may be a drag input of the user on the second application identifier or another feasible input. This is not limited in this embodiment of this application.

In this embodiment of this application, the seventh input is used to trigger the electronic device to display an application interface of the application.

In this embodiment of this application, moving the second application identifier to the third application identifier in the first background running interface may be that the second application identifier overlaps the third application identifier.

Step 308: In response to the seventh input, the electronic device obtains running data of a second application indicated by the second application identifier.

In this embodiment of this application, the running data includes process data of a first running process of the second application.

In this embodiment of this application, the process data of the first running process represents a current running status of the second application.

In this embodiment of this application, the running status includes progress of a target service, a name of the target service, and the like in the second application.

Step 309: The electronic device runs, based on the process data, a third application indicated by the third application identifier.

In this embodiment of this application, the electronic device may run the third application based on the current running status of the second application, and adjust a running status of the third application to a running status corresponding to the current running status of the second application.

In this embodiment of this application, after the second application identifier is moved to the third application identifier, the third application identifier is selected and run.

In this embodiment of this application, the second application identifier and the third application identifier may be displayed in the first background running interface according to a preset sequence.

For example, the preset sequence may include a previous open time sequence of the second application and the third application.

In this embodiment of this application, the second application and the third application are applications of a same type. For example, both are video play applications, music play applications, or map applications.

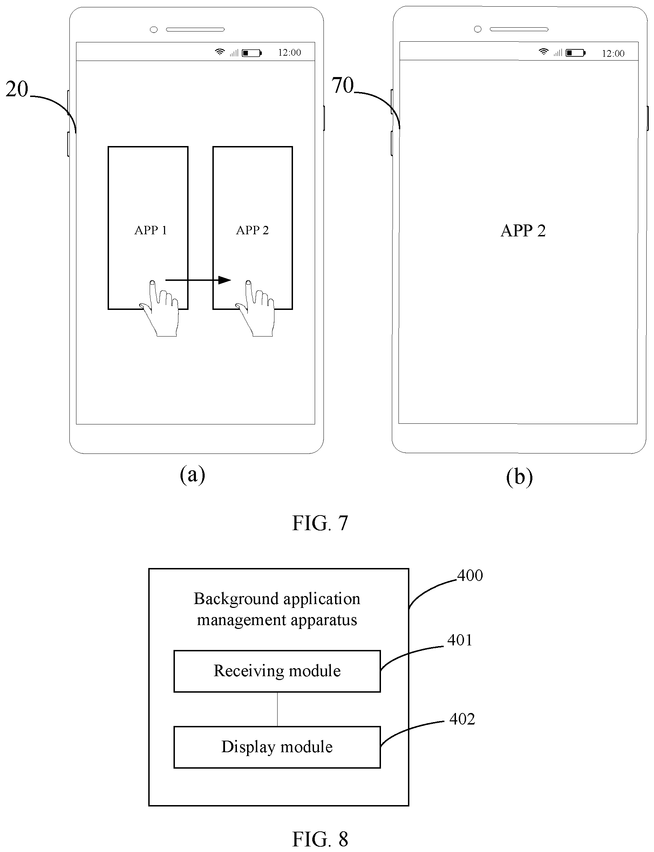

A "video" APP 1 (that is, the second application) and a "video" APP 2 (that is, the third application) are used as an example. As shown in (a) in FIG. 7, a portrait background running interface 20 displays application identifiers corresponding to the "video" APP 1 and the "video" APP 2. In a case that the user needs to continue playing a video of the "video" APP 1 in the "video" APP 2, the user may move the application identifier of the "video" APP 1 to the application identifier of the "video" APP 2 (that is, the fifth input). Then, as shown in (b) in FIG. 7, the electronic device displays an application interface of the "video" APP 2, and automatically continues playing the video A in the "video" APP 2 according to play progress of the video A of the "video" APP 1 (that is, the background running data of the second application).

In this way, the second application of the same type is moved to the third application to trigger the electronic device to automatically run the third application according to background data of the second application, so that flexibility of the electronic device to switch between applications of the same type is improved.

The background application management method provided in the embodiments of this application may be performed by a background application management apparatus. In the embodiments of this application, an example in which the background application management method performs the background application management method is used to describe the background application management apparatus provided in the embodiments of this application.

An embodiment of this application provides a background application management apparatus. As shown in FIG. 8, the background application management apparatus 400 includes a receiving module 401 and a display module 402, where the receiving module 401 is configured to receive a first input; and the display module 402 is configured to: in response to the first input received by the receiving module 401, display a first background running interface matching a current first screen display direction, where the first background running interface includes application identifiers corresponding to N applications running in the background, a display mode corresponding to the N applications running in the background matches the first screen display direction, and the display mode corresponding to the applications includes at least one of the following: a landscape display and a portrait display, where N is a positive integer.

Optionally, in this embodiment of this application, the first background running interface further includes a switching control. The receiving module 401 is further configured to: after the display module 402 displays the first background running interface matching the current first screen display direction, receive a second input for the switching control. The display module 402 is further configured to: in response to the second input received by the receiving module 401, display a second background running interface matching a second screen display direction indicated by the switching control, where the second screen display direction is different from the first screen display direction.

Optionally, in this embodiment of this application, a first identifier is displayed on a target application identifier in the second background running interface, the first identifier indicates a first display mode, and the first display mode matches the second screen display direction. The receiving module 401 is further configured to: after the display module 402 displays the second background running interface matching the second screen display direction indicated by the switching control, receive a third input for the first identifier. The display module 402 is further configured to: in response to the third input received by the receiving module 401, update the first identifier, where an updated first identifier indicates a second display mode, and the second display mode does not match the second screen display direction.

Optionally, in this embodiment of this application, the receiving module 401 is further configured to: after the display module 402 updates the first identifier in response to the third input, receive a fourth input for the target application identifier. The display module 402 is further configured to: in response to the fourth input received by the receiving module 401, display, based on the second display mode, an application interface of a target application corresponding to the target application identifier.

Optionally, in this embodiment of this application, the receiving module 401 is further configured to: after the display module 402 displays the first background running interface matching the current first screen display direction, receive a fifth input for adjusting the first screen display direction. The display module 402 is further configured to: in response to the fifth input received by the receiving module 401, display a third background running interface matching an adjusted third screen display direction.

Optionally, in this embodiment of this application, the receiving module 401 is further configured to: after the display module 402 displays the first background running interface matching the current first screen display direction, receive a sixth input for a first application identifier in the first background running interface. The display module 402 is further configured to: in response to the sixth input received by the receiving module 401, display an application interface of a first application based on a display mode corresponding to the first application indicated by the first application identifier.

Optionally, in this embodiment of this application, the receiving module 401 is further configured to: after the display module 402 displays the application interface of the first application, receive a drag input on the application interface. The display module 402 is further configured to: in response to the drag input received by the receiving module 401, in a drag process of the drag input, update the application interface to the application identifier of the first application, and display a deletion control; and delete the application interface when the drag input drags the application identifier to the deletion control.

Optionally, in this embodiment of this application, the background application management apparatus 400 further includes an execution module. The receiving module 401 is further configured to: after the display module 402 displays the first background running interface matching the current first screen display direction, receive a seventh input for moving a second application identifier to a third application identifier in the first background running interface. The execution module is configured to: in response to the seventh input received by the receiving module 401, obtain running data of a second application indicated by the second application identifier, where the running data includes process data of a first running process of the second application; and run, based on the process data, a third application indicated by the third application identifier.

In the background application management apparatus provided in this embodiment of this application, the background application management apparatus may receive the first input to trigger display of the first background running interface matching the current first screen display direction, where the first background running interface includes the application identifiers corresponding to the N applications running in the background, and the display mode corresponding to the application includes at least one of the following: the landscape display and the portrait display. In this way, when a background running interface is displayed in this application, an application identifier matching a current screen display direction is displayed in the background running interface, so that the background application management apparatus may display, in the background running interface, only N applications running in the background whose display mode matches the current screen display direction. Therefore, a user only needs to find and open a corresponding application from the N applications running in the background, to improve efficiency of finding the application when opening the application.

The background application management apparatus in this embodiment of this application may be an electronic device, or may be a component such as a circuit or a chip in the electronic device. The electronic device may be a terminal, or another device other than the terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like. The electronic device may be alternatively a server, a network attached storage (Network Attached Storage, NAS), a personal computer (personal computer, PC), a television (television, TV), a teller machine, a self-service machine, or the like. This is not specifically limited in this embodiment of this application.

The background application management apparatus in this embodiment of this application may be an apparatus with an operating system. The operating system may be an Android (Android) operating system, an iOS operating system, or another possible operating system. This is not specifically limited in this embodiment of this application.

The background application management apparatus provided in this embodiment of this application can implement the processes implemented in the method embodiments of FIG. 1 to FIG. 7. To avoid repetition, details are not described herein again.

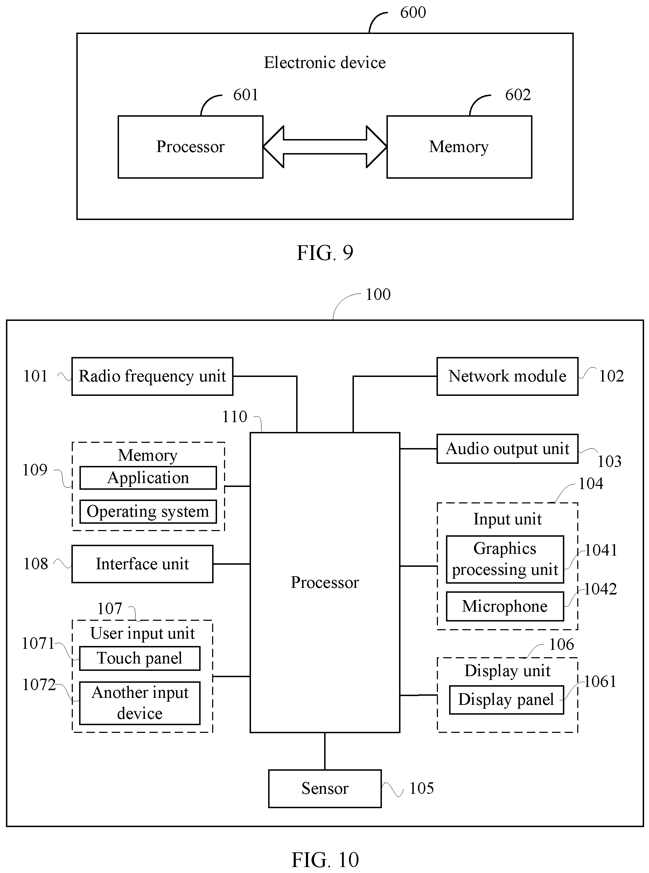

Optionally, as shown in FIG. 9, an embodiment of this application further provides an electronic device 600, including a processor 601 and a memory 602. The memory 602 stores a program or an instruction that is executable on the processor 601. The program or the instruction is executed by the processor 601 to implement the processes of the foregoing background application management method embodiments, and a same technical effect can be achieved. To avoid repetition, details are not described herein again.

It should be noted that the electronic device in this embodiment of this application includes the mobile electronic device and the non-mobile electronic device.

FIG. 10 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include a power supply (for example, a battery) that supplies power to each component. The power supply may be logically connected to the processor 110 by using a power supply management system, so as to manage functions such as charging, discharging, and power consumption by using the power supply management system. The structure of the electronic device shown in FIG. 10 does not constitute a limitation on the electronic device, and the electronic device may include more or fewer components than those shown in the figure, or combine some components, or have different component arrangements. Details are not described herein again.

The user input unit 107 is configured to receive a first input; and the display unit 106 is configured to: in response to the first input received by the user input unit 107, display a first background running interface matching a current first screen display direction, where the first background running interface includes application identifiers corresponding to N applications running in the background, a display mode corresponding to the N applications running in the background matches the first screen display direction, and the display mode corresponding to the applications includes at least one of the following: a landscape display and a portrait display, where N is a positive integer.

Optionally, in this embodiment of this application, the first background running interface further includes a switching control. The user input unit 107 is further configured to: after the display unit 106 displays the first background running interface matching the current first screen display direction, receive a second input for the switching control. The display unit 106 is further configured to: in response to the second input received by the user input unit 107, display a second background running interface matching a second screen display direction indicated by the switching control, where the second screen display direction is different from the first screen display direction.

Optionally, in this embodiment of this application, a first identifier is displayed on a target application identifier in the second background running interface, the first identifier indicates a first display mode, and the first display mode matches the second screen display direction. The user input unit 107 is further configured to: after the display unit 106 displays the second background running interface matching the second screen display direction indicated by the switching control, receive a third input for the first identifier. The display unit 106 is further configured to: in response to the third input received by the user input unit 107, update the first identifier, where an updated first identifier indicates a second display mode, and the second display mode does not match the second screen display direction.

Optionally, in this embodiment of this application, the user input unit 107 is further configured to: after the display unit 106 updates the first identifier in response to the third input, receive a fourth input for the target application identifier. The display unit 106 is further configured to: in response to the fourth input received by the user input unit 107, display, based on the second display mode, an application interface of a target application corresponding to the target application identifier.

Optionally, in this embodiment of this application, the user input unit 107 is further configured to: after the display unit 106 displays the first background running interface matching the current first screen display direction, receive a fifth input for adjusting the first screen display direction. The display unit 106 is further configured to: in response to the fifth input received by the user input unit 107, display a third background running interface matching an adjusted third screen display direction.

Optionally, in this embodiment of this application, the user input unit 107 is further configured to: after the display unit 106 displays the first background running interface matching the current first screen display direction, receive a sixth input for a first application identifier in the first background running interface. The display unit 106 is further configured to: in response to the sixth input received by the user input unit 107, display an application interface of a first application based on a display mode corresponding to the first application indicated by the first application identifier.

Optionally, in this embodiment of this application, the user input unit 107 is further configured to: after the display unit 106 displays the application interface of the first application, receive a drag input on the application interface. The display unit 106 is further configured to: in response to the drag input received by the user input unit 107, in a drag process of the drag input, update the application interface to the application identifier of the first application, and display a deletion control; and delete the application interface when the drag input drags the application identifier to the deletion control.

Optionally, in this embodiment of this application, the user input unit 107 is further configured to: after the display unit 106 displays the first background running interface matching the current first screen display direction, receive a seventh input for moving a second application identifier to a third application identifier in the first background running interface. The processor 110 is configured to: in response to the seventh input received by the user input unit 107, obtain running data of a second application indicated by the second application identifier, where the running data includes process data of a first running process of the second application; and run, based on the process data, a third application indicated by the third application identifier.

In the electronic device provided in this embodiment of this application, the electronic device may receive the first input to trigger display of the first background running interface matching the current first screen display direction, where the first background running interface includes the application identifiers corresponding to the N applications running in the background, and the display mode corresponding to the application includes at least one of the following: the landscape display and the portrait display. In this way, when a background running interface is displayed in this application, an application identifier matching a current screen display direction is displayed in the background running interface, so that the electronic device may display, in the background running interface, only N applications running in the background whose display mode matches the current screen display direction. Therefore, a user only needs to find and open a corresponding application from the N applications running in the background, to improve efficiency of finding the application when opening the application.

It should be understood that in this embodiment of this application, the input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

The memory 109 may be configured to store a software program and various data. The memory 109 may mainly include a first storage area for storing a program or an instruction and a second storage area for storing data. The first storage area may store an operating system, and an application or an instruction required by at least one function (for example, a sound playing function or an image playing function). In addition, the memory 109 may be a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any memory of another proper type.

The processor 110 may include one or more processing units. Optionally, an application processor and a modem processor are integrated into the processor 110. The application processor mainly processes an operating system, a user interface, an application, or the like. The modem processor mainly processes a wireless communication signal, for example, a baseband processor. It may be understood that, alternatively, the modem processor may not be integrated into the processor 110.

An embodiment of this application further provides a readable storage medium. The readable storage medium stores a program or an instruction, and the program or the instruction is executed by a processor to implement the processes of the foregoing background application management method embodiment, and a same technical effect can be achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, and the communication interface is coupled to the processor. The processor is configured to run a program or an instruction to implement the processes of the foregoing background application management method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application provides a computer program product. The program product is stored in a storage medium, and the program product is executed by at least one processor to implement the processes of the foregoing background application management method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A background application management method, wherein the method comprises:
receiving a first input; and
in response to the first input, displaying a first background running interface matching a current first screen display direction, wherein the first background running interface comprises application identifiers corresponding to N applications running in the background,
wherein a display mode corresponding to the N applications running in the background matches the first screen display direction, and the display mode corresponding to the applications comprises at least one of the following: a landscape display and a portrait display, wherein N is a positive integer.

2. The method according to claim 1, wherein the first background running interface further comprises a switching control; and
after the displaying a first background running interface matching a current first screen display direction, the method further comprises:
receiving a second input for the switching control; and
in response to the second input, displaying a second background running interface matching a second screen display direction indicated by the switching control, wherein
the second screen display direction is different from the first screen display direction.

3. The method according to claim 2, wherein a first identifier is displayed on a target application identifier in the second background running interface, the first identifier indicates a first display mode, and the first display mode matches the second screen display direction; and
after the displaying a second background running interface matching a second screen display direction indicated by the switching control, the method further comprises:
receiving a third input for the first identifier; and
in response to the third input, updating the first identifier, wherein an updated first identifier indicates a second display mode, and the second display mode does not match the second screen display direction.

4. The method according to claim 2 or 3, wherein after the in response to the third input, updating the first identifier, the method further comprises:
receiving a fourth input for the target application identifier; and
in response to the fourth input, displaying, based on the second display mode, an application interface of a target application corresponding to the target application identifier.

5. The method according to claim 1, wherein after the displaying a first background running interface matching a current first screen display direction, the method further comprises:
receiving a fifth input for adjusting the first screen display direction; and
in response to the fifth input, displaying a third background running interface matching an adjusted third screen display direction.

6. The method according to claim 1, wherein after the displaying a first background running interface matching a current first screen display direction, the method further comprises:
receiving a sixth input for a first application identifier in the first background running interface; and
in response to the sixth input, displaying an application interface of a first application based on a display mode corresponding to the first application indicated by the first application identifier.

7. The method according to claim 6, wherein after the displaying an application interface of a first application, the method further comprises:
receiving a drag input on the application interface;
in response to the drag input, in a drag process of the drag input, updating the application interface to the application identifier of the first application, and displaying a deletion control; and
deleting the application interface when the drag input drags the application identifier to the deletion control.

8. The method according to claim 1, wherein after the displaying a first background running interface matching a current first screen display direction, the method further comprises:
receiving a seventh input for a second application identifier and a third application identifier in the first background running interface;
in response to the seventh input, obtaining running data of a second application indicated by the second application identifier, wherein the running data comprises process data of a first running process of the second application; and
running, based on the process data, a third application indicated by the third application identifier.

9. A background application management apparatus, wherein the apparatus comprises a receiving module and a display module, wherein
the receiving module is configured to receive a first input; and
the display module is configured to: in response to the first input received by the receiving module, display a first background running interface matching a current first screen display direction, wherein the first background running interface comprises application identifiers corresponding to N applications running in the background,
wherein a display mode corresponding to the N applications running in the background matches the first screen display direction, and the display mode corresponding to the applications comprises at least one of the following: a landscape display and a portrait display, wherein N is a positive integer.

10. An electronic device, comprising a processor and a memory, wherein the memory stores a program or an instruction that is executable on the processor, and when the program or the instruction is executed by the processor, the steps of the background application management method according to any one of claims 1 to 8 are implemented.

11. A readable storage medium, wherein the readable storage medium stores a program or an instruction, and when the program or the instruction is executed by the processor, the steps of the background application management method according to any one of claims 1 to 8 are implemented.

12. A chip, wherein the chip comprises a processor and a communication interface, the communication interface is coupled to the processor, and the processor is configured to run a program or an instruction to implement the steps of the background application management method according to any one of claims 1 to 8.
